# DEMANDE DE BREVET EUROPEEN

(11) **EP 0 593 356 A1**
(43) Date de publication de la demande: **20.04.1994**
(21) Numéro de dépôt: 93402516.4
(22) Date de dépôt: 12.10.1993
(51) Int. Cl.: A47J 37/10

(54) **Casserole, notamment du type poêle à frire**

(30) Priorité: 13.10.1992 FR 9212228
(71) Demandeur: Recton, Marc Jean-Marie, 75013 Paris (FR)
(72) Inventeur: Recton, Marc Jean-Marie, 75013 Paris (FR)
(74) Mandataire: Cabinet HERRBURGER

(57) **Abrégé**

Casserole comportant un fond (1) délimité à sa périphérie par un rebord (2), casserole caractérisée en ce qu'elle comporte un plateau (4) disposé contre la face interne du fond de la casserole, des moyens (8, 9, 10₁) actionnés par un organe de commande (12, 19, 13) étant prévus entre le plateau et le fond pour écarter le plateau du fond.

## Description

La casserole de l'invention comporte un fond délimité à sa périphérie par un rebord, et est caractérisée en ce qu'elle comporte un plateau disposé contre la face interne du fond de la casserole, des moyens actionnés par un organe de commande étant prévus entre le plateau et le fond pour écarter le plateau du fond.

Suivant une autre caractéristique de l'invention, les moyens actionnés par l'organe de commande sont constitués, d'une part par un ressort tendant à écarter le plateau du fond, et d'autre part par une rampe de came et un doigt prévus, l'un sur le fond, l'autre sur le plateau, pour autoriser le soulèvement du plateau simultanément à sa rotation.

Suivant une autre caractéristique de l'invention, des moyens sont prévus sur la casserole et le plateau pour les verrouiller, l'organe de commande agissant sur ces moyens de verrouillage pour libérer le plateau et autoriser le soulèvement du plateau simultanément à sa rotation.

Suivant une autre caractéristique de l'invention, des butées sont prévues pour limiter les mouvements de rotation et de soulèvement simultanés du plateau, ces butées comprenant au moins un logement coopérant avec une saillie prévue l'un sur le fond, l'autre sur le plateau.

L'invention est représentée à titre d'exemple non limitatif sur les dessins ci-joints dans lesquels :
- la figure 1 est une vue en coupe axiale d'une poêle conforme à l'invention,
- la figure 2 est une vue de dessus de la poêle de la figure 1 dont le plateau a été ôté,
- la figure 3 est une vue de dessous du plateau de la poêle de la figure 1,
- la figure 4 est une vue en coupe suivant A-A des figures 2 et 3.

La présente invention a en conséquence pour but la réalisation d'une casserole qui permet d'évacuer automatiquement les matières grasses de cuisson des produits alimentaires et cela au moment désiré de la cuisson, soit afin de parfaire la cuisson des produits alimentaires hors du contact de ces matières grasses, soit afin de faciliter la récupération des produits alimentaires cuits.

L'invention permet également d'adapter la casserole au type de cuisson que l'on veut réaliser ou à la nature du produit alimentaire que l'on désire cuire simplement en remplaçant un plateau amovible de la casserole par un autre plateau de nature et/ou de structure différente.

Sur les dessins ci-joints, on a représenté à titre d'exemple une poêle à frire 1 délimitée à sa périphérie par un bord évasé 2, sur lequel est fixé un manche 3.

Contre la face supérieure du fond 1 est appliqué un plateau 4.

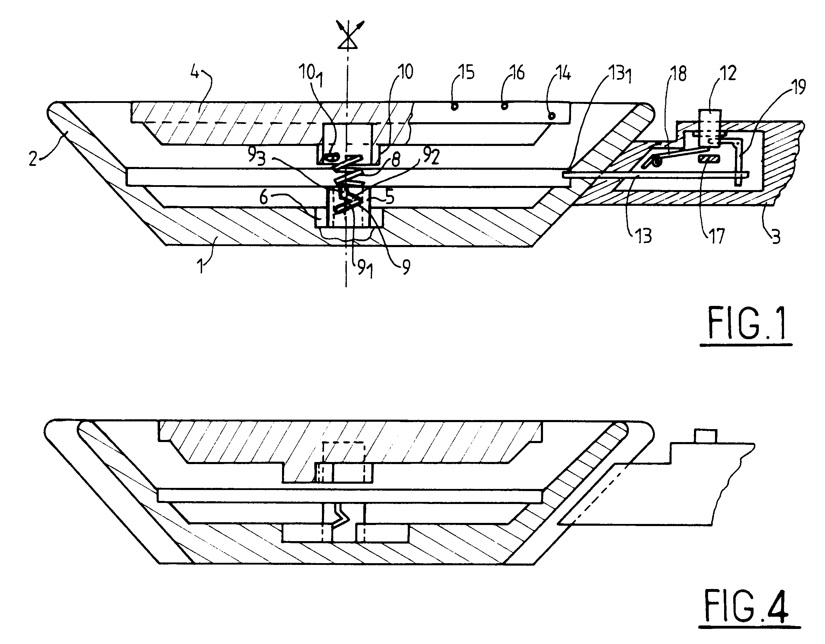

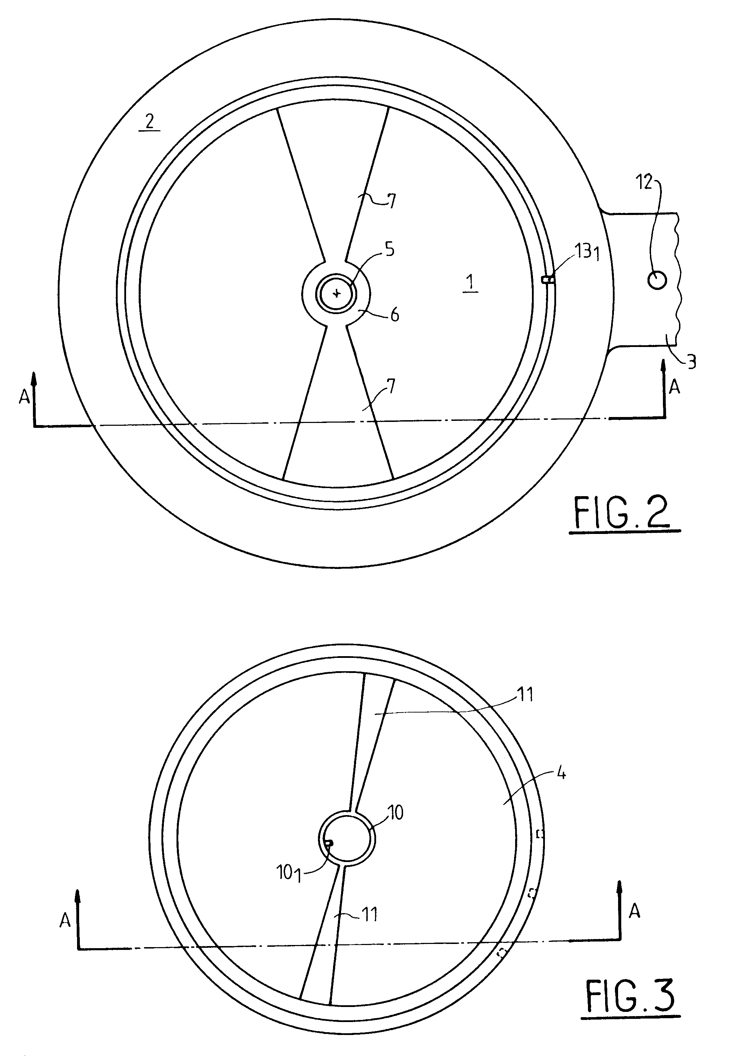

Au centre du fond 1 est prévu un manchon coaxial 5 qui est lui-même fixé dans le fond 1 à l'intérieur d'un logement circulaire 6 pourvu de deux prolongements diamétralement opposés 7 en forme de secteurs circulaires (voir figure 2).

A l'intérieur du manchon 5 est disposé un ressort à boudins 8 alors que la face externe du manchon 5 comporte une rampe inclinée 9 présentant deux zones 9₁ et 9₂ inclinées en sens contraire, l'extrémité libre de la zone supérieure 9₂ se prolongeant par une rainure verticale 9₃ débouchant à l'extrémité supérieure du manchon.

La face inférieure du plateau 4 est pourvue d'une bague coaxiale 10 dont le diamètre intérieur est légèrement supérieur au diamètre extérieur du manchon 9 et dont le diamètre extérieur est adapté à venir se loger dans le logement circulaire 6.

On notera cependant que le manchon 5 et la bague 10 prévus respectivement sur le fond 6 et le plateau 4, pourront être inversés.

La face interne de cette bague 10 est pourvue d'un doigt 10₁ venant se loger dans la rainure de la rampe 9.

La face inférieure du plateau 4 est également pourvue de deux saillies diamétralement opposées 11 en forme de secteurs circulaires et qui aboutissent au centre du plateau 4 sur la face externe de la bague 10.

L'angle au centre de ces secteurs circulaires 11 est notablement inférieur à celui des rainures en forme de secteur circulaire 7 du fond 1, de façon que lorsque les secteurs 11 sont disposés dans les secteurs 7, le plateau 4 puisse tourner d'un angle correspondant à la différence de l'angle au centre de ces secteurs 7 et 11. Le bord orienté radialement des secteurs 7 constitue donc des butées de contact limitant la rotation maximum du plateau 4.

Le manche 3 de la poêle est pourvu d'un bouton 12 qui constitue un organe de commande pour une tige 13 montée à coulissement dans un perçage correspondant de la paroi 2 de la poêle et du manche 3. L'extrémité 13₁ de cette tige peut ainsi faire saillie à l'intérieur de la poêle pour constituer un organe de verrouillage du plateau 4 en venant se loger dans l'une ou l'autre des perforations périphériques 14, 15 et 16 qu'il comporte.

Ce bouton 12 se déplace, dans la limite déterminée par une butée 17, à l'encontre d'un ressort à lames 18 afin d'actionner un levier coudé 19 logé par ailleurs dans une ouverture de la tige 13. Ainsi, en appuyant sur le bouton 12, on commande la tige 13 en coulissement afin d'extraire son extrémité 13₁ de l'un des logements 14, 15 ou 16.

Le fonctionnement de cette poêle est le suivant. Avant l'utilisation, le plateau 4, disposé coaxialement au fond 1, est enfoncé sur le fond à l'encontre du ressort 8, le doigt 10₁ venant se loger tout d'abord dans la rainure 9₃ puis dans les rainures 9₂ et 9₁ de la rampe 9. Au cours de ce mouvement d'enfoncement, le bouton 12 est enfoncé afin que l'extrémité 13₁ soit escamotée à l'intérieur de la paroi 2 de la poêle.

Lorsque le doigt 10₁ se trouve à l'extrémité inférieure de la zone 9₁ de la rampe, la face inférieure du plateau est en contact de la face supérieure du fond de la poêle et le trou borgne 14 se trouve en regard de l'extrémité de verrouillage 13₁. En relâchant le bouton 12, cette extrémité 13₁ pénètre alors dans le logement 14 afin de verrouiller le plateau 4.

L'opération de cuisson se déroule avec la quantité de matière grasse souhaitée puis, au moment désiré, l'opérateur appuie sur le bouton 12 afin de dégager l'extrémité 13₁ du doigt 13, ce qui a pour effet d'entraîner le plateau 4 dans un mouvement de soulèvement et de rotation simultanés du fait du déplacement du doigt 10₁ de l'extrémité inférieure vu l'extrémité supérieure de la zone 9₁ de la rampe 9, sous l'effet du ressort 8 qui tend à soulever le plateau 4.

L'angle au centre couvert par la zone 9₁ de la rampe correspond à la différence des angles au centre des secteurs circulaires 7 et 11 et, de ce fait, lorsque le doigt 10₁ arrive à l'extrémité supérieure de la rampe 9₁, les nervures 11 viennent s'appliquer contre les faces opposées des rainures 7.

Dans cette position également, le doigt de verrouillage 13₁ se trouve en regard du trou borgne 15 du plateau 4, si bien qu'en relâchant le bouton 12 l'extrémité 13₁ vient se loger dans ce trou borgne 15 afin de verrouiller le plateau 4 dans cette nouvelle position pour laquelle ce plateau est légèrement écarté du fond 1 mais toujours au contact du fond par les nervures 11.

Dans cette position, la matière grasse qui se trouvait initialement au-dessus du plateau 4, s'écoule par la périphérie de ce plateau sur la face supérieure du fond 1 et dans les rainures en forme de secteurs circulaires 7.

La matière grasse est ainsi évacuée de la face supérieure du plateau 4 de façon qu'il soit possible, soit de poursuivre la cuisson sans matière grasse, soit de faciliter l'enlèvement des produits alimentaires cuits sans être gênés par la matière grasse.

Si l'opérateur appuie à nouveau sur le bouton 12, il libère à nouveau le plateau 4 qui, dans ce cas, va tourner en sens contraire du fait du déplacement du doigt 10₁ dans la zone de la rampe 9₂.

Si l'opérateur libère le bouton 12 alors que le doigt 10₁ est situé à l'extrémité supérieure de cette zone 9₂, dans ce cas l'extrémité 13₁ de la tige de verrouillage 13 vient se loger dans le troisième trou borgne 16, la position de ce trou borgne 16 par rapport au trou borgne 15 correspondant à l'angle au centre couvert par la zone 9₂ de la rampe 9. Si l'opérateur appuie à nouveau sur le bouton 12, dans ce cas le ressort 8 soulève verticalement le plateau 4 sans rotation de ce dernier, du fait que le doigt 10₁ se déplace dans la rampe verticale 9₃, ce qui permet alors l'extraction du plateau pour son remplacement par un plateau de nature ou de structure différente.

## Revendications

**1)** Casserole notamment du type poêle à frire, comportant un fond (1) délimité à sa périphérie par un rebord (2), casserole caractérisée en ce qu'elle comporte un plateau (4) disposé contre la face interne du fond de la casserole, des moyens (8, 9, 10₁) actionnés par un organe de commande (12, 19, 13) étant prévus entre le plateau et le fond pour écarter le plateau du fond.

**2)** Casserole conforme à la revendication 1, caractérisée en ce que les moyens actionnés par l'organe de commande (12) sont constitués, d'une part par un ressort (8) tendant à écarter le plateau du fond (1), et d'autre part par une rampe de came (9) et un doigt (10₁) prévus, l'un sur le fond, l'autre sur le plateau, pour autoriser le soulèvement du plateau simultanément à sa rotation.

**3)** Casserole conforme à la revendication 2, caractérisée en ce que des moyens (13₁, 14, 15, 16) sont prévus sur la casserole et le plateau pour les verrouiller, l'organe de commande (12, 19, 13) agissant sur ces moyens de verrouillage pour libérer le plateau et autoriser le soulèvement du plateau simultanément à sa rotation.

**4)** Casserole conforme à l'une quelconque des revendications précédentes, caractérisée en ce que des butées (11, 7) sont prévues pour limiter les mouvements de rotation et de soulèvement simultanés du plateau, ces butées comprenant au moins un logement (7) coopérant avec une saillie (11) prévue l'un sur le fond (1), l'autre sur le plateau (4).

**5)** Casserole conforme à la revendication 4, caractérisée en ce que le logement (7) est réalisé sous la forme d'au moins un secteur circulaire.

**6)** Casserole conforme à la revendication 5, caractérisée en ce que la saillie est prévue sous le plateau et est constituée par une nervure (11) réalisée sous la forme d'un secteur circulaire dont l'angle au centre est notamment plus faible que l'angle au centre du logement en forme de secteur circulaire (7) du fond.

**7)** Casserole conforme à la revendication 3, caractérisée en ce que les moyens de verrouillage sont constitués par une tige (13) montée à coulissement sur la casserole pour se loger dans un trou borgne (14, 15, 16) de la périphérie du plateau, l'organe de commande étant constitué par une tringlerie (19) reliée à un bouton de commande (12) et actionnant la tige (13).

**8)** Casserole conforme à la revendication 2, caractérisée en ce que la rampe de came (9) est formée sur un manchon (5) fixé coaxialement au centre du fond (1), le ressort (8) d'écartement du plateau étant constitué par un ressort à boudins logé dans ce manchon, tandis que le doigt (10₁) coopérant avec cette rampe (9) est formé sur une bague (10) solidaire du plateau et entourant coaxialement le manchon.

**9)** Casserole conforme à la revendication 8, caractérisée en ce que la rampe de came (9) présente deux zones (9₁, 9₂) d'inclinaison inverse, l'une de ces zones déterminant un angle de rotation du plateau correspondant à l'angle de rotation déterminé par les butées (11).

**10)** Casserole conforme à l'une quelconque des revendications de 7 à 9, caractérisée en ce que la périphérie du plateau comporte au moins deux trous borgnes (14, 15, 16) coopérant avec le doigt de verrouillage (13₁) pour des positions angulaires du plateau correspondant à la disposition du doigt aux extrémités de la rampe (9).
